# EUROPEAN PATENT SPECIFICATION

(11) **EP 3 792 990 B1**
(45) Date of publication and mention of the grant of the patent: **01.06.2022**
(21) Application number: 19800275.0
(22) Date of filing: 05.04.2019
(51) Int. Cl.: H01M 10/16, H01M 50/572, H01M 50/103, H01M 50/119

(54) **BATTERY PACK**
BATTERIEPACK
BLOC-BATTERIE

(30) Priority: 11.05.2018 JP 2018092424
(43) Date of publication of application: 17.03.2021
(73) Proprietor: Showa Denko Materials Co., Ltd., Tokyo 100-6606 (JP)
(72) Inventor: KARITANI Kenji, Tokyo 100-6606 (JP); KIMURA Tetsuya, Tokyo 100-6606 (JP); OGASAHARA Yoshitaka, Tokyo 100-6606 (JP); TSUJII Nobunaga, Tokyo 100-6606 (JP); MUKAITANI Ichiroh, Tokyo 100-6606 (JP)
(74) Representative: Hoffmann Eitle
(86) International application number: PCT/JP2019/015158
(87) International publication number: WO 2019/216079

(56) References cited:
- WO-A1-2012/141608
- CN-U- 204 441 356
- CN-Y- 2 193 595
- GB-A- 2 267 992
- JP-A- H07 505 737
- JP-A- S62 271 369
- JP-A- 2002 042 763
- JP-A- 2011 134 552
- JP-U- H0 177 268
- US-A1- 2003 003 350
- US-A1- 2004 185 339
- US-A1- 2007 042 263
- US-A1- 2015 155 742

## Description

### Technical Field

One aspect of the present invention relates to a battery pack.

### Background Art

A battery pack in which a plurality of lead storage batteries are combined may be used to obtain a desired output voltage.

JP 2002-93397 A discloses a battery pack including a plurality of battery units stacked vertically. Each of the battery units includes a metallic accommodating frame for lead storage batteries, and the lead storage batteries arrayed in one direction and accommodated in the metallic accommodating frame for the lead storage batteries.

Further previously known battery packs are derivable from US 2015 155 742 A1, CN 204 441 356 U and GB 2 67 992 A.

### Summary of Invention

### Technical Problem

In a lead storage device for cycle use, a grid body filled with an electrode material extends during repeated charging and discharging. Further, in a standby (trickle use) lead storage battery, the grid body filled with the electrode material extends with lapse of time. The inventors of the present application have found that a part of the grid body extended in this way, specifically a protrusion projecting outwardly in a plan view from a frame forming an outline of the grid body penetrates a battery case, and contacts the metallic accommodating frame for the lead storage battery in which the lead storage batteries are arrayed, and thus there is a possibility of ground fault (electric leakage).

Therefore, an object of one aspect of the present invention is to provide a battery pack capable of preventing ground fault even if a protrusion that is a part of a grid body penetrates a battery case.

### Solution to Problem

The objects above are solved by means of a battery pack according to independent claim 1. Preferred embodiments are derivable from the dependent claims.

A battery pack according to one aspect of the present invention includes: a metallic accommodating frame for a lead storage battery that accommodates the lead storage battery including an electrode group in which a positive electrode plate and a negative electrode plate are stacked with a separator interposed therebetween, and a battery case for accommodating the electrode group, in which the positive electrode plate and the negative electrode plate are formed by filling an electrode material into a grid body having a protrusion that projects outwardly from a frame forming an outline in a plan view, and the metallic accommodating frame includes: a conductive housing having an opening that opens horizontally, and accommodating the lead storage battery therein; and a first protector that is disposed between a first surface facing the protrusion among surfaces forming the battery case of the lead storage battery accommodated in the housing and the housing, and is made of an insulating material.

The first protector includes a flat plate-shaped first main body and a first standing portion that stands from an edge of the first main body.

The battery pack further includes a plurality of the lead storage batteries that are accommodated in a state of being arrayed in a direction perpendicular to an opening direction of the housing and the vertical direction.

In the battery pack having this configuration, when the lead storage battery is accommodated in the housing, the first protector made of the insulating material is disposed between the first surface and the housing. That is, in the metallic accommodating frame having this configuration, the first protector is disposed behind the first surface when viewed from inside the battery case. Thus, even if the grid body extends during repeated charging and discharging, and the protrusion that is a part of the grid body penetrates the battery case, the first protector is disposed behind a position penetrated. As a result, even if the protrusion that is the part of the grid body penetrates the battery case, the protrusion does not directly contact the housing, so that the ground fault can be prevented. Further, since the first protector can be fitted to the first surface of the battery case, the first protector can be reliably disposed on the first surface.

In the battery pack, even if the protrusion that is the part of the grid body penetrates the battery case, the ground fault can be prevented.

In the battery pack according to one aspect of the present invention, a supporter that supports the protrusion may be formed on an inner surface of the first surface of the battery case. Thus, even when the protrusion penetrates the battery case together with the supporter, the ground fault can be prevented.

The battery pack according to one aspect of the present invention may further include a second protector that include a flat plate-shaped second main body and a second standing portion that stands from an edge of the second main body, in which the second protector may be disposed between a bottom surface among the surfaces forming the housing, the bottom surface supporting the lead storage battery from below when the lead storage battery is accommodated in the housing, and the lead storage battery accommodated in the housing. This makes it possible to receive electrolyte solution that leaks out when the protrusion penetrates the first surface of the battery case. As a result, it is possible to prevent the ground fault through the electrolyte solution.

In the battery pack according to one aspect of the present invention, the first protector and the second protector may be integrally formed. This makes it possible to easily fix the first protector and the second protector to the lead storage battery.

In the battery pack according to one aspect of the present invention, a liquid absorbent paper may be disposed in the second main body. Thus, it is possible to prevent the electrolyte solution from leaking from the second protector more reliably.

In the battery pack according to one aspect of the present invention, the lead storage battery having a nominal voltage of 2V or more may be accommodated. Thus, the metallic accommodating frame can prevent the ground fault even when it accommodates a high-voltage lead storage battery.

In the battery pack according to one aspect of the present invention, ribs may be formed on outer surfaces of the surfaces forming the battery case. Thus, when a protective member is attached to the lead storage battery, a space is formed between the first main body of the second protector and the battery case, so that the electrolyte solution can be retained in the space.

In the battery pack according to one aspect of the present invention, the lead storage batteries each may be arranged such that a second surface, on which terminals are provided, among the surfaces forming the battery case is exposed from the opening. In this case, the lead storage battery can be accommodated in the housing in a laid state.

### Advantageous Effects of Invention

According to one aspect of the present invention, it is possible to prevent the ground fault even if the protrusion that is the part of the grid body penetrates the battery case.

### Brief Description of Drawings

FIG. 1 is an exploded perspective view illustrating a lead storage battery according to an embodiment.
FIG. 2 is a plan view of a grid body according to the embodiment.
FIG. 3 is an enlarged view of a protrusion formed on the grid body inside a battery case.
FIG. 4 is a plan view of a grid body base material according to the embodiment.
FIG. 5 is a perspective view illustrating a state in which one lead storage battery is removed from a housing that accommodates lead storage batteries.
FIG. 6 is a perspective view illustrating a battery pack in which housings accommodating the lead storage batteries are stacked.
FIG. 7(a) is a perspective view illustrating a protective member, and FIG. 7(b) is a perspective view illustrating the lead storage battery to which the protective member is attached.
FIG. 8(a) is a perspective view illustrating the protective member according to a modification, and FIG. 8(b) is a perspective view illustrating the lead storage battery to which the protective member according to the modification is attached.

### Description of Embodiments

Hereinafter, an embodiment according to one aspect of the present invention will be described in detail with reference to the drawings. In the drawings, the same or equivalent elements will be denoted by the same reference numerals, and redundant description will be omitted.

### <Lead storage battery>

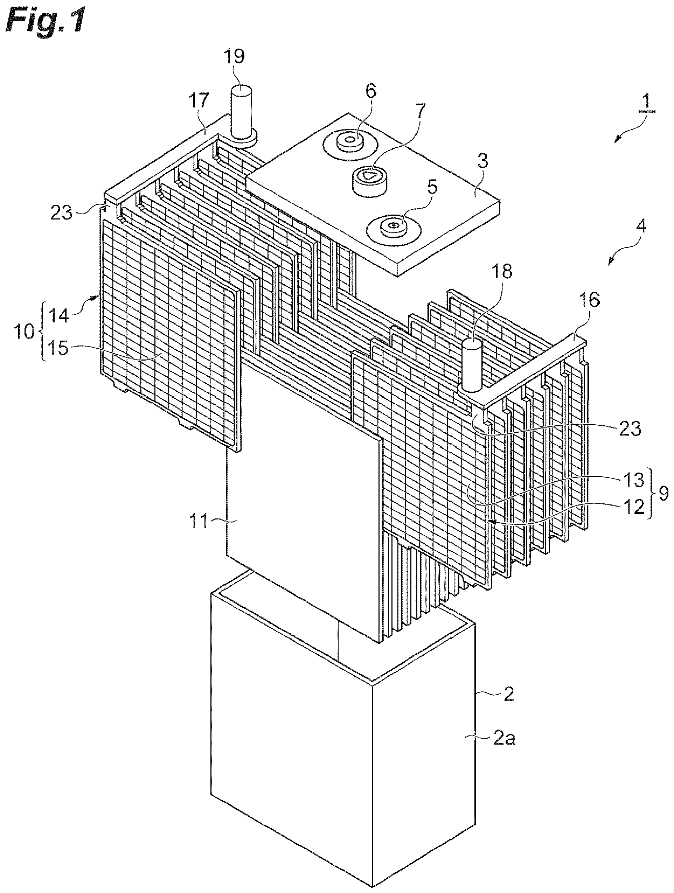

FIG. 1 is an exploded perspective view illustrating a lead storage battery according to the embodiment. As illustrated in FIG. 1, a lead storage battery 1 includes a battery case 2 having an open top surface, a lid 3 that closes the opening of the battery case 2, and an electrode group 4. In the description of the lead storage battery 1, a direction in which the lid 3 is located is referred to as "upper" for convenience.

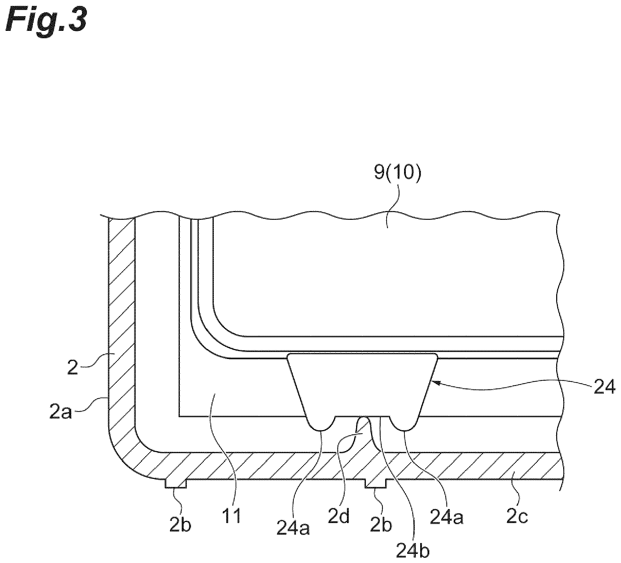

The battery case 2 is made of, for example, polypropylene (PP), ABS, or polyphenylene ether (PPE). The lid (a second surface) 3 provided with terminals among surfaces forming the battery case 2 has a positive electrode terminal 5, a negative electrode terminal 6, and a control valve 7 for discharging excess gas to the outside of the battery case 2. Ribs 2b (see FIG. 3) are formed on an outer surface 2a of each surface forming the battery case 2. The height of the rib 2b (protrusion height from the outer surface 2a) is, for example, 2 mm to 5 mm. Inside the battery case 2, the electrode group 4 and an electrolyte solution such as dilute sulfuric acid are contained.

The electrode group 4 includes a positive electrode plate 9, a negative electrode plate 10, and a separator 11 disposed between the positive electrode plate 9 and the negative electrode plate 10. Specifically, the electrode group 4 has a structure in which positive electrode plates 9 and negative electrode plates 10 are alternately stacked with the separators 11 therebetween. The positive electrode plates 9 and the negative electrode plates 10 are arranged such that their main surfaces are perpendicular to the opening surface of the battery case 2. In the electrode group 4, tabs 23 of positive electrode grid bodies 12 of a plurality of the positive electrode plates 9 are integrally welded with a positive electrode strap 16. Similarly, the tabs 23 of negative electrode grid bodies 14 of a plurality of the negative electrode plates 10 are integrally welded with a negative electrode strap 17. The positive electrode strap 16 is connected to the positive electrode terminal 5 through a positive electrode column 18. The negative electrode strap 17 is connected to the negative electrode terminal 6 through a negative electrode column 19.

The positive electrode plate 9 includes the positive electrode grid body 12 and a positive electrode material 13 filled in the positive electrode grid body 12. The positive electrode grid body 12 is a grid body used for the positive electrode plate 9 of the lead storage battery 1. The positive electrode grid body 12 is made of, for example, a lead alloy containing lead as a main component. The lead alloy may contain one or more elements of antimony, tin, calcium, and aluminum as a component other than lead. The lead alloy may further contain, for example, at least one of bismuth and silver. The positive electrode material 13 contains a positive electrode active material, an additive, and the like. Examples of the positive electrode active material include lead dioxide. Examples of the additive include carbon materials, reinforcing short fibers, and the like.

The negative electrode plate 10 has the negative electrode grid body 14 and a negative electrode material 15 filled in the negative electrode grid body 14. The negative electrode grid body 14 is a grid body used for the negative electrode plate 10 of the lead storage battery 1. The negative electrode grid body 14 is made of, for example, the lead alloy containing lead as a main component. The lead alloy may contain one or more elements of antimony, tin, calcium, and aluminum as a component other than lead. The lead alloy may further contain, for example, at least one of bismuth and silver. The negative electrode material 15 contains a negative electrode active material, an additive, and the like. Examples of the negative electrode active material include spongy lead and the like. Examples of the additive include barium sulfate, carbon materials, reinforcing short fibers, and the like.

The separator 11 is, for example, an electrolyte solution holder (retainer) that holds the electrolyte solution such as dilute sulfuric acid. The separator 11 holds the electrolyte solution and allows sulfate ions and hydrogen ions (protons) to pass through, while blocking electrical contact between the positive electrode plate 9 and the negative electrode plate 10. In the present embodiment, the separator 11 has a plate shape, but may have, for example, a bag shape capable of wrapping the positive electrode plate 9. The lead storage battery 1 described above has a nominal voltage of 2 V or higher.

### <Grid body>

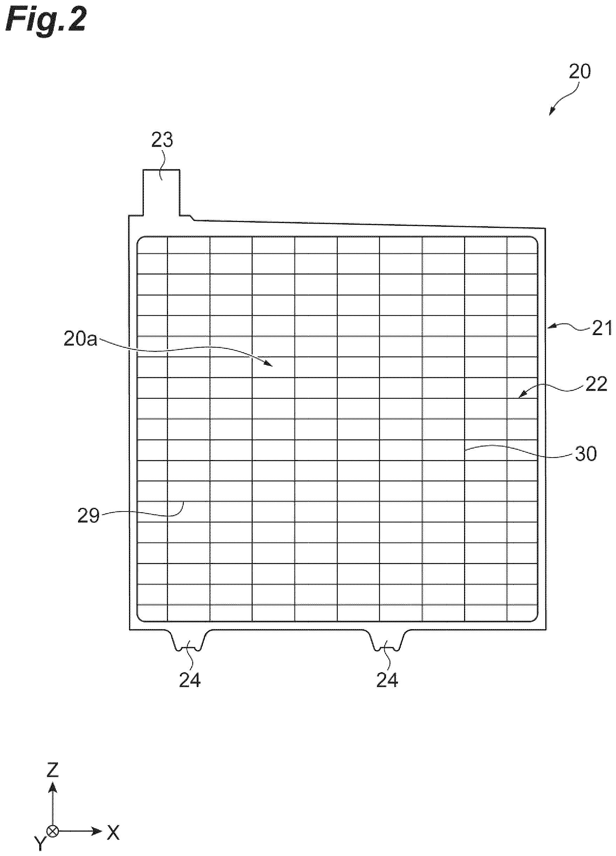

Next, configurations of the positive electrode grid body 12 and the negative electrode grid body 14 will be described. FIG. 2 is a plan view of the grid body. As illustrated in FIG. 2, a grid body 20 includes a frame 21, a grid section 22, the tab 23, and protrusions 24.

In the following description, since the positive electrode grid body 12 and the negative electrode grid body 14 have the same configuration, they will be described as the grid body 20 without distinguishing them. The X-axis direction is a width direction. The Z-axis direction is a vertical direction. The Y-axis direction is a thickness direction.

The frame 21 defines an internal space 20a for holding an electrode material (the positive electrode material 13 and the negative electrode material 15). The frame 21 is a rectangular frame. The grid section 22 is provided in the internal space 20a and holds the electrode material. The grid section 22 includes a plurality of grid bones 29 and a plurality of grid bones 30. Each of the grid bones 29 is a long columnar member extending in the X-axis direction. Each of the grid bones 30 is a long columnar member extending in the Z-axis direction. The grid bones 29 and the grid bones 30 intersect each other and are arranged to form a grid. Details of the grid bones 29 will be described below. The tab 23 is a rectangular plate-shaped current collecting member provided on an upper portion of the frame 21.

The protrusion 24 is a plate-shaped member provided on a bottom portion of the frame 21. The protrusion 24 projects outwardly from the frame 21 that forms an outline in a plan view. FIG. 3 is an enlarged view of the protrusions formed on the grid body inside the battery case. As illustrated in FIG. 3, the protrusion 24 has movement regulators 24a, 24a and a supported portion 24b disposed between the movement regulators 24a, 24a. The movement regulators 24a, 24a project downwardly from the supported portion 24b. The grid body 20 including the protrusions 24 is manufactured by pouring molten metal into a mold including portions forming the frame 21, the grid section 22, the tab 23, and the protrusions 24.

A supporter 2d is formed on an inner surface of a first surface 2c facing the protrusion 24 among the surfaces forming the battery case 2. The supporter 2d supports the supported portion 24b of the protrusion 24. The first surface 2c is also a surface facing the lid 3. The protrusion 24 may be formed only of the supported portion 24b, and the movement regulators 24a, 24a may not be formed.

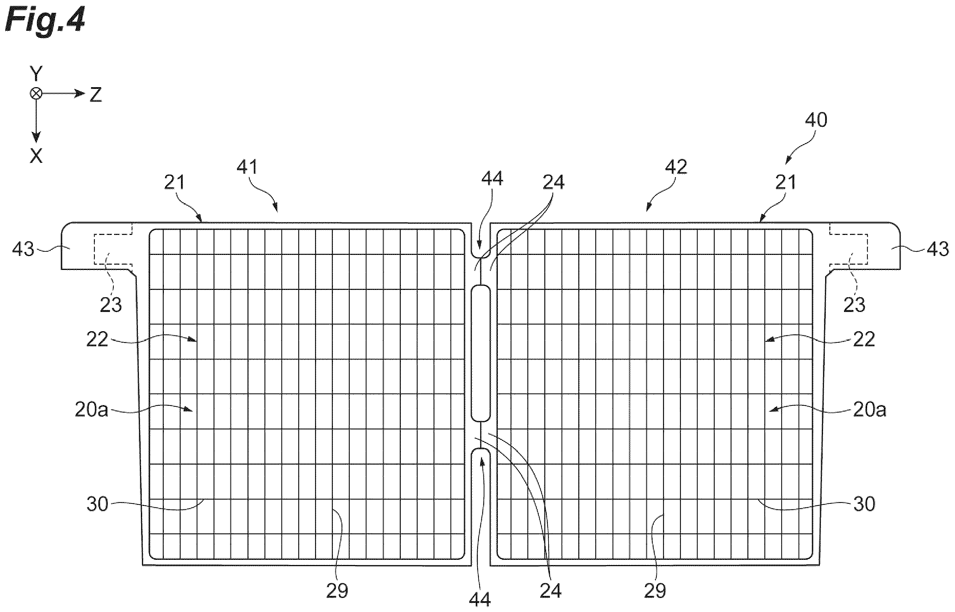

FIG. 4 is a plan view of a grid body base material according to the embodiment. A grid body base material 40 illustrated in FIG. 4 is a member that is a base of the grid body 20, and includes a first portion 41 and a second portion 42. Each of the first portion 41 and the second portion 42 includes the frame 21, the grid section 22, a projecting portion 43 for forming the tab 23, and the protrusions 24 that connect the first portion 41 and the second portion 42. That is, the grid body base material 40 is used to manufacture two electrode plates. In separating the grid body base material 40 into the first portion 41 and the second portion 42, the protrusions 24 are cut. The projecting portion 43 of the first portion 41 and the projecting portion 43 of the second portion 42 protrude in opposite directions. The protrusion 24 of the first portion 41 and the protrusion 24 of the second portion 42 are connected to each other to form a coupling portion 44. The protrusion 24 of the grid body 20 formed in this way has a flat bottom formed. That is, the protrusion 24 is formed only from the supported portion 24b, and the movement regulators 24a, 24a are not formed. Even when the grid body 20 is formed from the grid body base material, the movement regulators 24a, 24a may be formed by appropriate processing.

### <Metallic accommodating frame>

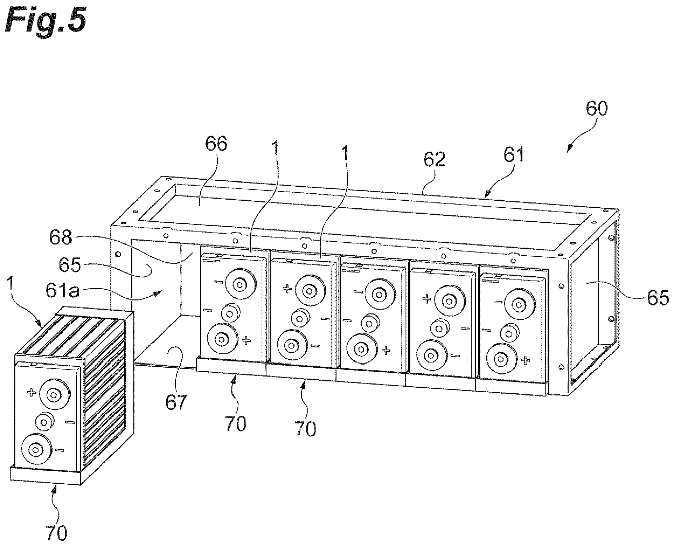

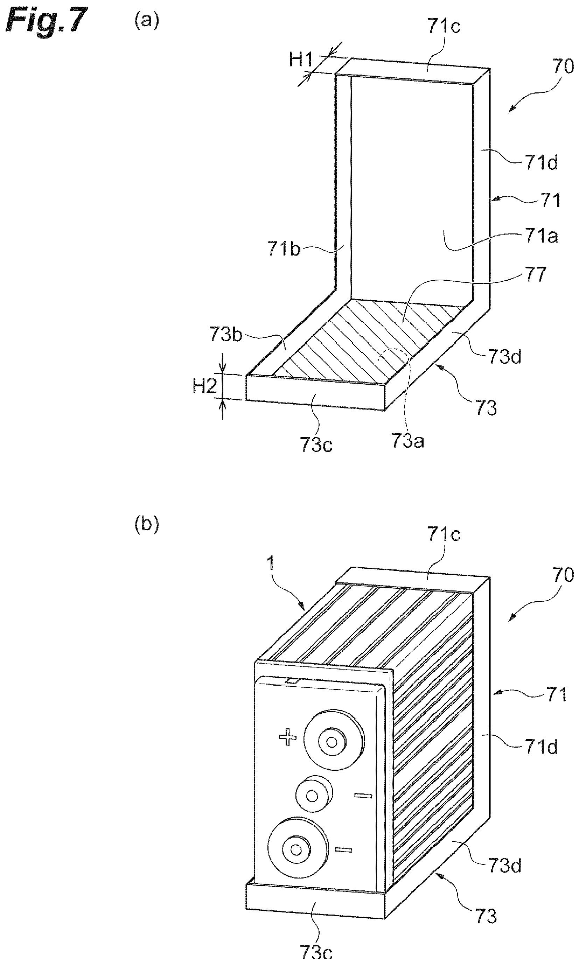

Next, a metallic accommodating frame 60 for the lead storage battery 1 described above will be described. FIG. 5 is a perspective view illustrating a state in which one lead storage battery is removed from the housing that accommodates the lead storage batteries. FIG. 7(a) is a perspective view illustrating a protective member, and FIG. 7(b) is a perspective view illustrating the lead storage battery to which the protective member is attached. As illustrated in FIG. 5, the metallic accommodating frame 60 includes a housing 61 and protective members 70 (see FIG. 7(a)). The housing 61 has an opening 61a, and the lead storage battery 1 is accommodated in a state where the opening 61a faces a horizontal direction. The housing 61 is made of a conductive material such as steel plate hot commercial (SPHC) and SS400, and has a frame 62, a pair of side surfaces 65 and 65, a top surface 66, a bottom surface 67, and a back surface 68.

The protective member 70 is made of the insulating material such as flame-retardant polybutylene terephthalate. As illustrated in FIG. 7(a), the protective member 70 has a first protector 71 and a second protector 73. As illustrated in FIG. 5, the first protector 71 is disposed between the first surface 2c (see FIG. 3) facing the protrusion 24 among the surfaces forming the battery case 2 of the lead storage battery 1 and the housing 61. In the present embodiment, when the lead storage battery 1 is accommodated in the housing 61, the first protector 71 is disposed between the first surface 2c (see FIG. 3) of the battery case 2 forming the lead storage battery 1 and the back surface 68 of the housing 61. As illustrated in FIG. 7(a), the first protector 71 has a flat plate-shaped first main body 71a and first standing portions 71b, 71c, 71d that stand from edges of the first main body 71a. Note that a second main body 73a, which will be described below, also serves as the first standing portion. The thickness of the first main body 71a is, for example, 0.1 mm to 1.0 mm. The height HI of the first standing portions 71b, 71c, 71d (protrusion height from the first main body 71a) is, for example, 10 mm to 200 mm.

The second protector 73 is disposed between one of the surfaces forming the battery case 2 of the lead storage battery 1 accommodated in the housing 61 and the bottom surface 67 of the housing 61. The bottom surface 67 described above is a surface that supports the lead storage battery 1 from below when the lead storage battery 1 is accommodated in the housing 61 among surfaces forming the housing 61. The second protector 73 has a flat plate-shaped second main body 73a and second standing portions 73b, 73c, 73d that stand from edges of the second main body 73a. The first main body 71a described above also serves as the second standing portion. The thickness of the second main body 73a is, for example, 0.1 mm to 1.0 mm. The height H2 of the second standing portions 73b, 73c, 73d (protrusion height from the second main body 73a) is, for example, 10 mm to 40 mm.

A liquid absorbent paper 77 is disposed on the second main body 73a of the second protector 73. More specifically, the liquid absorbent paper 77 is disposed in a space surrounded by the second standing portions 73b, 73c, 73d and the first main body 71a on all sides. The first protector 71 and the second protector 73 are integrally formed. Thus, as illustrated in FIG. 7(b), the protective member 70 can be fitted to contact the two surfaces forming the battery case 2 of the lead storage battery 1.

### <Battery pack>

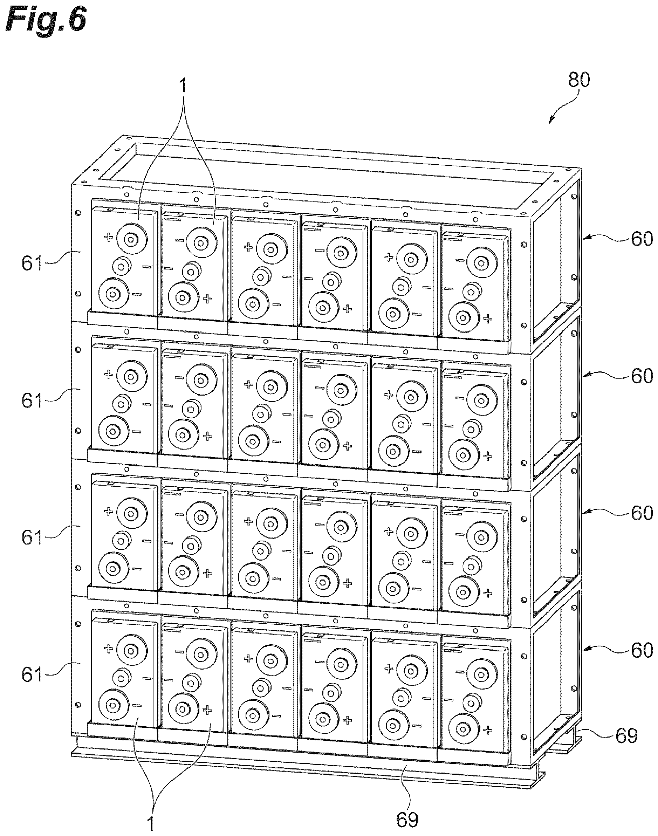

FIG. 6 is a perspective view illustrating a battery pack in which housings accommodating the lead storage batteries are stacked. As illustrated in FIG. 6, in a battery pack 80, the housings 61 in which six (plural) lead storage batteries 1 are arrayed in a lateral direction are vertically stacked in four stages. That is, the housing 61 accommodates the six lead storage batteries 1 in a state of being arrayed in a direction perpendicular to a direction of the opening 61a of the housing 61 and the vertical direction. The lead storage battery 1 is accommodated in the housing 61 with the protective member 70 (see FIG. 7(a)) attached. More specifically, the lead storage battery 1 is disposed such that the lid 3 formed with the positive electrode terminal 5, the negative electrode terminal 6, and the control valve 7 among the surfaces forming the battery case 2 is exposed from the opening 61a. The lead storage batteries 1 accommodated in such a state are electrically connected with each other in the battery pack 80. In FIG. 6, illustration of a connecting portion for connecting the lead storage batteries 1 is omitted.

The housings 61 stacked in the vertical direction are fixed by bolts and nuts (not shown). The housings 61 stacked in four stages are placed on a pedestal 69. The pedestal 69 is, for example, H steel made of a steel material such as SS400, and is provided on a floor surface on which the battery pack 80 is installed. An insulating sheet or the like may be disposed between the floor surface and the pedestal 69. The battery pack 80 is formed by electrically connecting the lead storage batteries accommodated in such a metallic accommodating frame 60. The battery pack 80 is used for cycle applications such as a solar power generation system, a wind power generation system, and a load leveling system, and trickle applications such as UPS and communication equipment.

Next, operational effects of the metallic accommodating frame 60 and the battery pack 80 according to the above-described embodiment will be described. In the metallic accommodating frame 60 and a method for preventing ground fault according to the above-described embodiment, when the lead storage battery 1 is accommodated in the housing 61, the first protector 71 made of the insulating material is disposed between the first surface 2c and the housing 61. That is, in the metallic accommodating frame 60 according to the above-described embodiment, the first protector 71 is disposed behind the first surface 2c when viewed from inside the battery case 2. Thus, even if the grid body 20 filled with the electrode material extends during repeated charging and discharging, and the protrusion 24 that is a part of the grid body 20 penetrates the battery case 2, the first protector 71 is disposed behind a position penetrated. As a result, even if the protrusion 24 that is the part of the grid body 20 penetrates the battery case 2, the protrusion 24 does not directly contact the housing 61, so that the ground fault can be prevented.

In the metallic accommodating frame 60 according to the above-described embodiment, even when the protrusion 24 penetrates the battery case 2 integrally with the supporter 2d, the ground fault can be prevented.

In the above-described embodiment, since the first protector 71 can be attached to be fitted to the first surface 2c of the battery case 2, the first protector 71 can be reliably disposed on the first surface 2c.

In the above-described embodiment, the second protector 73 having the flat plate-shaped second main body 73a and the second standing portions 73b, 73c, 73d standing from the edges of the second main body is disposed between the bottom surface 67 of the housing 61 and the lead storage battery 1 accommodated in the housing 61. Thus, even if the electrolyte solution leaks out when the protrusion 24 penetrates the first surface 2c of the battery case 2, the electrolyte solution can be received. As a result, it is possible to prevent the ground fault through the electrolyte solution.

In the above-described embodiment, since the first protector 71 and the second protector 73 are integrally formed, the first protector 71 and the second protector 73 can be easily fixed to the lead storage battery 1.

In the above-described embodiment, since the liquid absorbent paper 77 is disposed on the second main body 73a, it is possible to prevent the electrolyte solution from overflowing from the second protector 73 more reliably.

Since the metallic accommodating frame 60 according to the above-described embodiment is a metallic frame for accommodating the lead storage battery 1 having a nominal voltage of 2 V or more, even when a high voltage lead storage battery 1 is accommodated, the lead storage battery 1 can be accommodated more safely.

In the above-described embodiment, the ribs 2b are formed on the outer surface 2a of each surface forming the battery case 2. Therefore, a space is formed between the second main body 73a of the second protector 73 and the battery case 2, so that the electrolyte solution can be retained in the space.

In the above-described embodiment, the ground fault can be prevented, even when the lead storage battery 1 is disposed such that the lid 3 formed with the positive electrode terminal 5, the negative electrode terminal 6, and the control valve 7 is exposed from the opening 61a, that is, even when the lead storage battery 1 is accommodated in the housing 61 in a laid state.

Although the embodiment has been described above, one aspect of the present invention is not limited to the above-described embodiment, but various modifications can be made without departing from the spirit of one aspect of the invention.

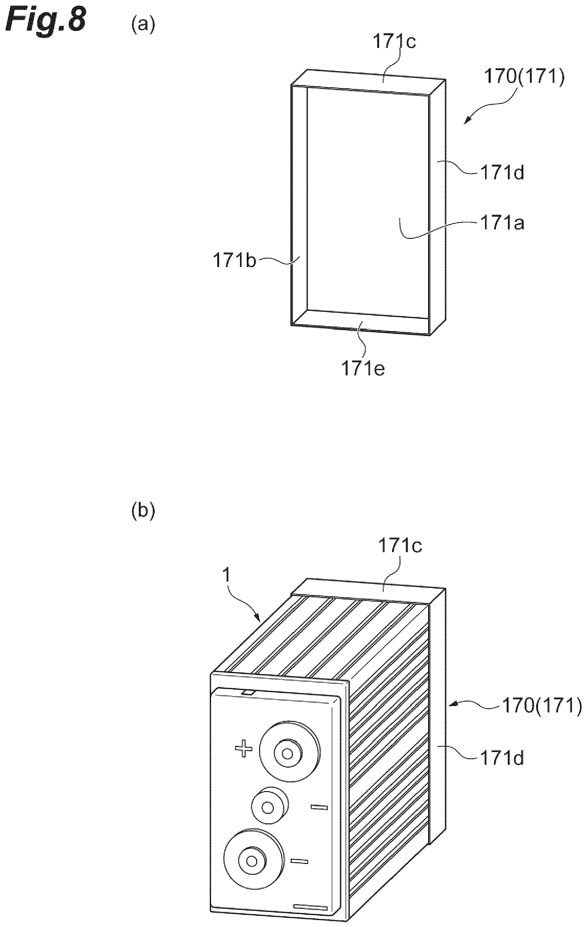

In the metallic accommodating frame 60 according to the above-described embodiment, as illustrated in FIG. 7(a), the protective member 70 in which the first protector 71 and the second protector 73 are integrated has been described as an example; however, the protective member 70 is not limited to this. For example, as illustrated in FIG. 8(a), a protective member 170 may include only a first protector 171 disposed between the first surface 2c facing the protrusion 24 among the surfaces forming the battery case 2 of the lead storage battery 1 and the housing 61. That is, the protective member 170 may be disposed between the first surface 2c of the battery case 2 forming the lead storage battery 1 and the back surface 68 of the housing 61. As illustrated in FIG. 8(b), the protective member 170 according to a modification can be fitted to the first surface 2c facing the protrusion 24. Even with the metallic accommodating frame 60 including the protective member 170 according to the modification, even if the protrusion 24 that is a part of the grid body 20 penetrates the battery case 2, the ground fault can be prevented.

In the first protector 171 according to the above-described modification, the first protector 171 having first standing portions 171b, 171c, 171d, 171e at edges of a first main body 171a has been described as an example; however, the first protector 171 may include only the plate-shaped first main body 71a. Even in this case, even if the protrusion 24 that is the part of the grid body 20 penetrates the battery case 2, the ground fault can be prevented.

In the above-described embodiment and modification, an example in which the housings 61 having the six lead storage batteries 1 arranged therein are stacked in four stages has been described; however, one aspect of the present invention is not limited to this. For example, two or more and five or less or seven or more lead storage batteries 1 may be arrayed in the housing 61. Further, the housing 61 accommodating the lead storage batteries 1 may be in one stage, two stages, three stages, or five or more stages. These numbers are appropriately set according to the application.

In the above-described embodiment and modification, an example in which the first protector 71 is disposed between the first surface 2c of the battery case 2 forming the lead storage battery 1 and the back surface 68 of the housing 61 has been described; however, in addition to this, a third protector may be provided between one surface, which is perpendicular to the first surface 2c and the lid 3 and forming the battery case 2, and the side surface 65 of the housing 61. The third protector is a plate-shaped member formed of the same insulating material as the first protector 71.

In the above-described embodiment and modification, an example in which the surface facing the lid 3 among the surfaces forming the battery case 2 is a surface facing the protrusion 24 has been described, one surface perpendicular to the lid 3 may be the surface facing the protrusion 24. Also in this case, the first protector 71 is disposed between the first surface 2c facing the protrusion 24 and one of the surfaces forming the housing 61.

As in the above-described embodiment and modification, since the first surface 2c facing the protrusion 24 is formed on one of the surfaces forming the battery case 2, it is a surface facing the lid 3 or a surface perpendicular to the lid 3 as described above. Since the lead storage battery 1 is also accommodated in the housing 61 in various modes (in the above-described embodiment, accommodated such that the lid 3 is exposed), the protective members 70 and 170 are appropriately arranged depending on a relationship between a position in which the protrusion 24 is provided and the housing 61.

In the above-described embodiment and modification, an example in which the lead storage battery 1 is disposed such that the lid 3 formed with the positive electrode terminal 5, the negative electrode terminal 6, and the control valve 7 is exposed from the opening 61a, that is, an example in which the lead storage battery 1 is accommodated in the housing 61 in the laid state has been described; however, one aspect of the present invention is not limited to this. For example, the lead storage battery 1 may be disposed with the lid 3 facing upward. That is, the lead storage battery 1 may be accommodated in the housing 61 in an upright state.

In the above-described embodiment and modification, although an example in which the ribs 2b are formed on the outer surfaces 2a of the surfaces forming the battery case 2 of the lead storage battery 1 has been described, the ribs 2b may not be formed on all or part of the outer surfaces 2a of the surfaces forming the battery case 2.

### Reference Signs List

1: lead storage battery, 2: battery case, 2a: outer surface, 2b: rib, 2c: first surface, 2d: supporter, 3: lid, 20: grid body, 21: frame, 24: protrusion, 24a: movement regulator, 24b: supported portion, 60: metallic accommodating frame, 61: housing, 61a: opening, 62: frame, 67: bottom surface, 68: back surface, 69: pedestal, 70: protective member, 71: first protector, 71a: first main body, 71b, 71c, 71d: first standing portion, 73: second protector, 73a: second main body, 73b, 73c, 73d: second standing portion, 77: liquid absorbent paper, 80: battery pack, 170: protective member, 171: first protector, 171a: first main body, 171b, 171c, 171d, 171e: first standing portion.

## Claims

1. A battery pack (80) comprising:
a metallic accommodating frame (60) for a lead storage battery (1) that accommodates the lead storage battery (1) including an electrode group in which a positive electrode plate and a negative electrode plate are stacked with a separator interposed therebetween, and a battery case (2) for accommodating the electrode group, in which the positive electrode plate and the negative electrode plate are formed by filling an electrode material into a grid body (20) having a protrusion (24) that projects outwardly from a frame (21, 62) forming an outline in a plan view, the metallic accommodating frame (60) comprising:
a conductive housing (61) having an opening (61a) that opens horizontally in a state where the opening (61a) faces a horizontal direction, and accommodating the lead storage battery (1) therein; and
a first protector (71, 171) that is disposed between a first surface (2c) facing the protrusion (24) among surfaces forming the battery case (2) of the lead storage battery (1) accommodated in the housing (61) and the housing (61), and is made of an insulating material,
wherein the first protector (71, 171) includes a flat plate-shaped first main body (71a 171a) and a first standing portion (71b, 71c, 71d, 171b, 171c, 171d, 171e) that stands from an edge of the first main body (71a, 171a), and
wherein the battery pack (80) further comprises a plurality of the lead storage batteries (1) that are accommodated in a state of being arrayed in a direction perpendicular to an opening (61a) direction of the housing (61) and the vertical direction.

2. The battery pack (80) according to claim 1, wherein a supporter (2d) that supports the protrusion (24) is formed on an inner surface of the first surface (2c) of the battery case (2).

3. The battery pack (80) according to claim 1 or 2, further comprising a second protector (73) that include a flat plate-shaped second main body (73a) and a second standing portion (73b, 73c, 73d) that stands from an edge of the second main body (73a), wherein
the second protector (73) is disposed between a bottom surface (67) among the surfaces forming the housing (61), the bottom surface (67) supporting the lead storage battery (1) from below when the lead storage battery (1) is accommodated in the housing (61)

4. The battery pack (80) according to claim 3, wherein the first protector (71, 171) and the second protector (73) are integrally formed.

5. The battery pack (80) according to claim 3 or 4, wherein a liquid absorbent paper (77) is disposed in the second main body (73a).

6. The battery pack (80) according to any one of claims 1 to 5, wherein the lead storage battery (1) having a nominal voltage of 2V or more is accommodated.

7. The battery pack (80) according to any of the preceding claims , wherein ribs (2b) are formed on outer surfaces (2a) of the surfaces forming the battery case (2).

8. The battery pack (80) according to any of the preceding claims, wherein the lead storage batteries (1) each are arranged such that a second surface, on which terminals are provided, among the surfaces forming the battery case (2) is exposed from the opening (61a).

## Patentansprüche

1. Akkupack (80), umfassend:
einen metallischen Aufnahmerahmen (60) für einen Bleiakkumulator (1), der den Bleiakkumulator (1) aufnimmt, einschließlich einer Elektrodengruppe, in der eine positive Elektrodenplatte und eine negative Elektrodenplatte mit einem dazwischen eingefügten Separator gestapelt sind, und einem Batteriegehäuse (2) zur Aufnahme der Elektrodengruppe, in dem die positive Elektrodenplatte und die negative Elektrodenplatte durch Einfüllen eines Elektrodenmaterials in einen Gitterkörper (20) mit einem Vorsprung (24) gebildet sind, der von einem Rahmen (21, 62), der in einer Draufsicht einen Umriss bildet, nach außen vorsteht, wobei der metallische Aufnahmerahmen (60) Folgendes umfasst:
ein leitfähiges Gehäuse (61), das eine Öffnung (61a) aufweist, die sich in einem Zustand, in dem die Öffnung (61a) einer horizontalen Richtung zugewandt ist, horizontal öffnet, und das den Bleiakkumulator (1) darin aufnimmt; und
eine erste Schutzvorrichtung (71, 171), die zwischen einer ersten, dem Vorsprung (24) zugewandten Fläche (2c) zwischen Flächen, die das Batteriegehäuse (2) des im Gehäuse (61) untergebrachten Bleiakkumulators (1) bilden, und dem Gehäuse (61) angeordnet ist und aus einem isolierenden Material gefertigt ist,
wobei die erste Schutzvorrichtung (71, 171) einen flachen, plattenförmigen ersten Hauptkörper (71a, 171a) und einen ersten stehenden Abschnitt (71b, 71c, 71d, 171b, 171c, 171d, 171e) einschließt, der von einem Rand des ersten Hauptkörpers (71a, 171a) absteht, und
wobei der Akkupack (80) weiter eine Vielzahl der Bleiakkumulatoren (1) umfasst, die in einem Zustand untergebracht sind, in dem sie in einer Richtung senkrecht zu einer Öffnungsrichtung (61a) des Gehäuses (61) und der vertikalen Richtung aufgestellt sind.

2. Akkupack (80) nach Anspruch 1, wobei ein Träger (2d), der den Vorsprung (24) trägt, auf einer Innenfläche der ersten Fläche (2c) des Batteriegehäuses (2) gebildet ist.

3. Akkupack (80) nach Anspruch 1 oder 2, weiter umfassend eine zweite Schutzvorrichtung (73), die einen flachen, plattenförmigen zweiten Hauptkörper (73a) und einen zweiten stehenden Abschnitt (73b, 73c, 73d) einschließt, der von einer Kante des zweiten Hauptkörpers (73a) absteht, wobei
die zweite Schutzvorrichtung (73) zwischen einer Bodenfläche (67) unter den das Gehäuse (61) bildenden Flächen angeordnet ist, wobei die Bodenfläche (67) den Bleiakkumulator (1) von unten stützt, wenn der Bleiakkumulator (1) in dem Gehäuse (61) untergebracht ist

4. Akkupack (80) nach Anspruch 3, wobei die erste Schutzvorrichtung (71, 171) und die zweite Schutzvorrichtung (73) einstückig gebildet sind.

5. Akkupack (80) nach Anspruch 3 oder 4, wobei in dem zweiten Hauptkörper (73a) ein flüssigkeitsabsorbierendes Papier (77) angeordnet ist.

6. Akkupack (80) nach einem der Ansprüche 1 bis 5, wobei der Bleiakkumulator (1), der eine Nennspannung von 2 V oder mehr aufweist, untergebracht ist.

7. Akkupack (80) nach einem der vorstehenden Ansprüche, wobei Rippen (2b) an Außenflächen (2a) der Flächen, die das Batteriegehäuse (2) bilden, gebildet sind.

8. Akkupack (80) nach einem der vorstehenden Ansprüche, wobei die Bleiakkumulatoren (1) jeweils so eingerichtet sind, dass eine zweite Fläche, auf der Pole bereitgestellt sind, unter den das Batteriegehäuse (2) bildenden Flächen von der Öffnung (61a) aus frei liegt.

## Revendications

1. Bloc batterie (80), comprenant :
un cadre de logement métallique (60) pour une batterie d'accumulateurs au plomb (1) qui loge la batterie d'accumulateurs au plomb (1), incluant un groupe électrode dans lequel une plaque électrode positive et une plaque électrode négative sont empilées avec un séparateur interposé entre celles-ci, et un boîtier de batterie (2), pour loger le groupe électrode, dans lequel la plaque électrode positive et la plaque électrode négative sont formées en remplissant, avec un matériau d'électrode, un corps de grille (20) présentant une protubérance (24) qui fait saillie vers l'extérieur à partir d'un cadre (21, 62) formant un contour en vue en plan, le cadre de logement métallique (60) comprenant :
un logement conducteur (61) présentant une ouverture (61a) qui s'ouvre horizontalement dans un état où l'ouverture (61a) fait face à une direction horizontale, et logeant la batterie d'accumulateurs au plomb (1) dans celui-ci ; et
un premier dispositif de protection (71, 171) qui est disposé entre une première surface (2c) faisant face à la protubérance (24) parmi des surfaces formant le boîtier de batterie (2) de la batterie d'accumulateurs au plomb (1) logée dans le logement (61) et le logement (61), et est fait d'un matériau isolant,
dans lequel le premier dispositif de protection (71, 171) inclut un premier corps principal en forme de plaque plate (71a, 171a) et une première partie verticale (71b, 71c, 71d, 171b, 171c, 171d, 171e) qui est verticale depuis un bord du premier corps principal (71a, 171a), et
dans lequel le bloc batterie (80) comprend en outre une pluralité des batteries d'accumulateurs au plomb (1) qui sont logées dans un état où elles sont déployées dans une direction perpendiculaire à une direction d'une ouverture (61a) du logement (61) et la direction verticale.

2. Bloc batterie (80) selon la revendication 1, dans lequel un dispositif de support (2d) qui supporte la protubérance (24) est formé sur une surface intérieure de la première surface (2c) du boîtier de batterie (2).

3. Bloc batterie (80) selon la revendication 1 ou 2, comprenant en outre un second dispositif de protection (73) qui inclut un second corps principal en forme de plaque plate (73a) et une seconde partie verticale (73b, 73c, 73d) qui est verticale depuis un bord du second corps principal (73a), dans lequel
le second dispositif de protection (73) est disposé entre une surface inférieure (67) parmi les surfaces formant le logement (61), la surface inférieure (67) supportant la batterie d'accumulateurs au plomb (1) à partir d'en dessous lorsque la batterie d'accumulateurs au plomb (1) est logée dans le logement (61).

4. Bloc batterie (80) selon la revendication 3, dans lequel le premier dispositif de protection (71, 171) et le second dispositif de protection (73) sont formés de façon monobloc.

5. Bloc batterie (80) selon la revendication 3 ou 4, dans lequel un papier absorbeur de liquide (77) est disposé dans le second corps principal (73a).

6. Bloc batterie (80) selon l'une quelconque des revendications 1 à 5, dans lequel la batterie d'accumulateurs au plomb (1) présentant une tension nominale de 2V ou plus est logée.

7. Bloc batterie (80) selon l'une quelconque des revendications précédentes, dans lequel des nervures (2b) sont formées sur des surfaces extérieures (2a) des surfaces formant le boîtier de batterie (2).

8. Bloc batterie (80) selon l'une quelconque des revendications précédentes, dans lequel les batteries d'accumulateurs au plomb (1) sont chacune agencées de telle sorte qu'une seconde surface, sur laquelle des bornes sont prévues, parmi les surfaces formant le boîtier de batterie (2), soit exposée à partir de l'ouverture (61a).
